# EUROPEAN PATENT SPECIFICATION

(11) **EP 1 950 389 B1**
(45) Date of publication and mention of the grant of the patent: **20.08.2014**
(21) Application number: 08250289.9
(22) Date of filing: 23.01.2008
(51) Int. Cl.: F02B 61/02, B62M 7/02, B62J 25/00

(54) **Motorcycle**
Motorrad
Motocyclette

(30) Priority: 26.01.2007 JP 2007016493
(43) Date of publication of application: 30.07.2008
(73) Proprietor: Yamaha Hatsudoki Kabushiki Kaisha, Shizuoka-ken Shizuoka 438-8501 (JP)
(72) Inventor: Oishi, Akifumi, Iwata-shi Shizuoka-ken 438-8501 (JP); Ishida, Yousuke, Iwata-shi Shizuoka-ken 438-8501 (JP)
(74) Representative: Grünecker, Kinkeldey, Stockmair & Schwanhäusser

(56) References cited:
- US-A1- 2002 104 701
- US-A1- 2006 124 372

## Description

### BACKGROUND

The invention relates to a motorcycle.

In JP-A-2006-168468, for example, an engine unit is disclosed including in flat view an engine and a belt type continuously variable transmission (a continuously variable transmission will be referred to as a "CVT", hereinafter).

An engine unit can be wide where a belt type CVT is located on the outer side of a piston of an engine in the vehicle width direction. This can cause a footstep to project greatly in the vehicle width direction in a motorcycle to which the engine unit including the belt type CVT is mounted. Accordingly, it can be difficult to keep down the width of the vehicle body.

In consideration of the above, the invention seeks to keep down a width of a vehicle body of a motorcycle to which an engine unit including a belt type CVT is mounted.

### SUMMARY

An aspect of the invention provides a motorcycle that comprises: an engine unit; and a pair of right and left footsteps. The engine unit comprises: an engine; a belt type continuously variable transmission; a clutch; and a rotation motor. The engine includes a crankshaft. The belt type continuously variable transmission includes a primary sheave, a secondary sheave shaft and a secondary sheave. The primary sheave is provided on one side of the crankshaft in a vehicle width direction. The secondary sheave shaft is provided behind the crankshaft. The secondary sheave is provided on the secondary sheave shaft. The clutch is provided on another side in the vehicle width direction with respect to the secondary sheave on the secondary sheave shaft. The rotation motor is provided on the other side of the crankshaft in the vehicle width direction.

In an embodiment of a motorcycle in accordance with the invention, a center axis of rotation of the secondary sheave shaft is provided at a position higher than a center axis of rotation of the crankshaft. At least a part of the pair of right and left footsteps is located behind a rear end of the rotation motor and under a lower end of the secondary sheave.

An embodiment of the invention can keep down a vehicle width of a motorcycle to which an engine unit is mounted.

### BRIEF DESCRIPTION OF THE DRAWINGS

Embodiments of the invention are described hereinafter, byway of example only, with respect to the accompanying drawings.
Fig. 1 is a right side view of a motorcycle.
Fig. 2 is a sectional view of a part of a center portion of a motorcycle in right side view.
Fig. 3 is a sectional view of an engine unit.
Fig. 4 is a sectional view of a part of an engine unit portion of a motorcycle in right side view.
Fig. 5 is a sectional view of a part of a motorcycle in flat view.

### DETAILED DESCRIPTION

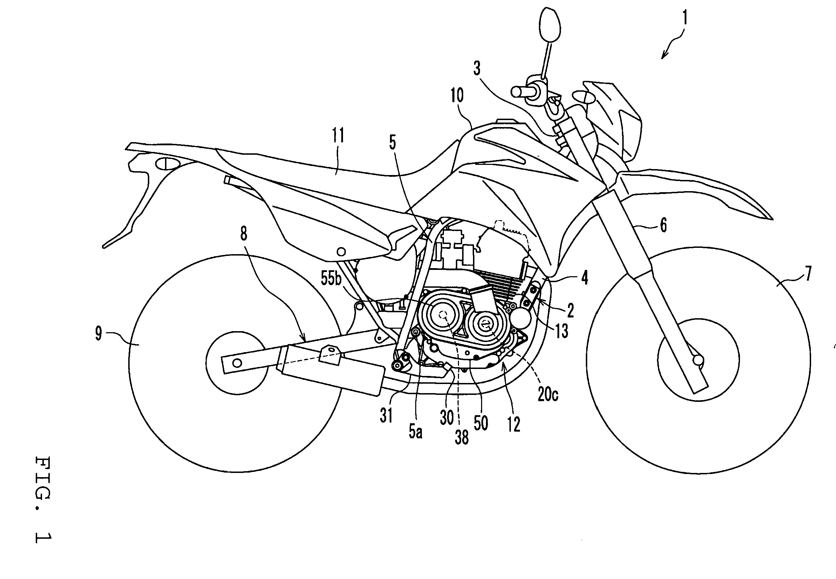

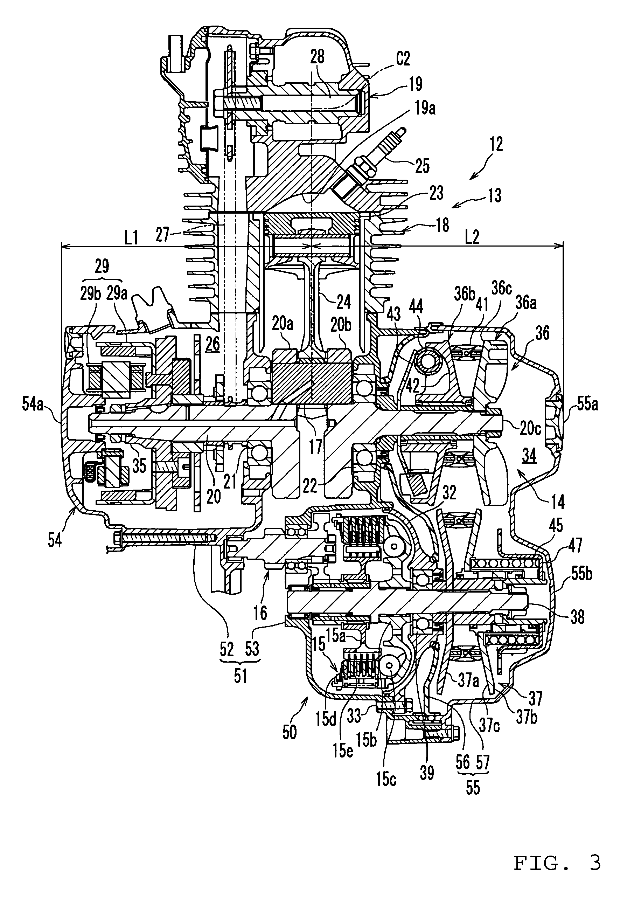

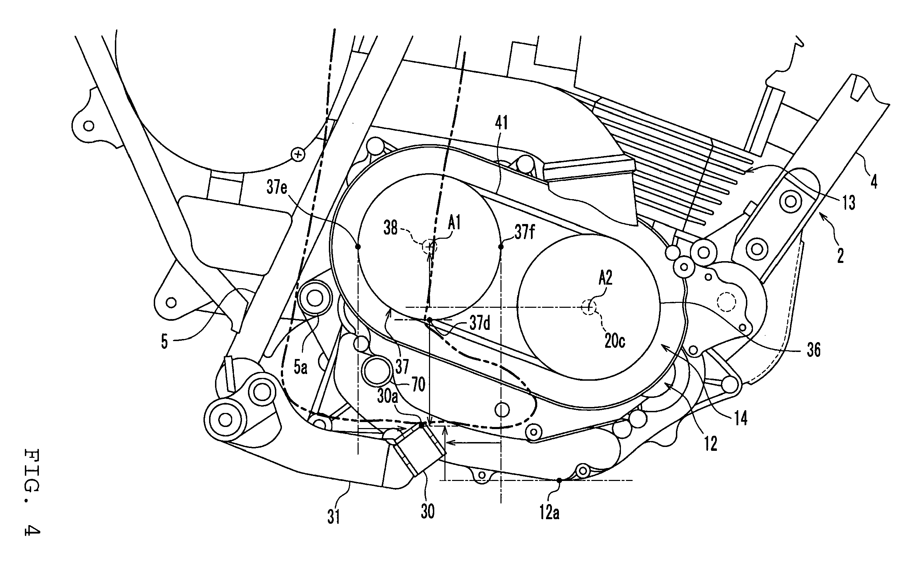

An embodiment relates to an off-road type motorcycle 1 in which at least a part of a pair of right and left footsteps 30 is located behind a rear end of a generator 29 and an engine unit 12 including a belt type CVT 14 is mounted, as shown in Figs. 1 and 3. In the embodiment, a center axis of rotation A1 of a secondary sheave shaft 38 is provided at a position higher than a center axis of rotation A2 of a crankshaft 20 while the pair of right and left footsteps 30 is provided so that at least a part of the footsteps 30 would be located under a lower end of a secondary sheave 37, as shown in Fig. 4. This allows the pair of right and left footsteps 30 to be provided on a further inner side in the vehicle width direction. A reduction in vehicle width is thus achieved.

The off-road type motorcycle 1 in accordance with the embodiment will be described in detail hereinafter with reference to Fig. 1. An embodiment of a motorcycle in accordance with the invention, however, is not limited to the specific embodiment. Indeed, another embodiment can be another sort of motorcycle, which term is to be interpreted in a broad sense. That is to say, an embodiment of a motorcycle in accordance with the invention could be in the form of a motor scooter or a so-called moped, for example.

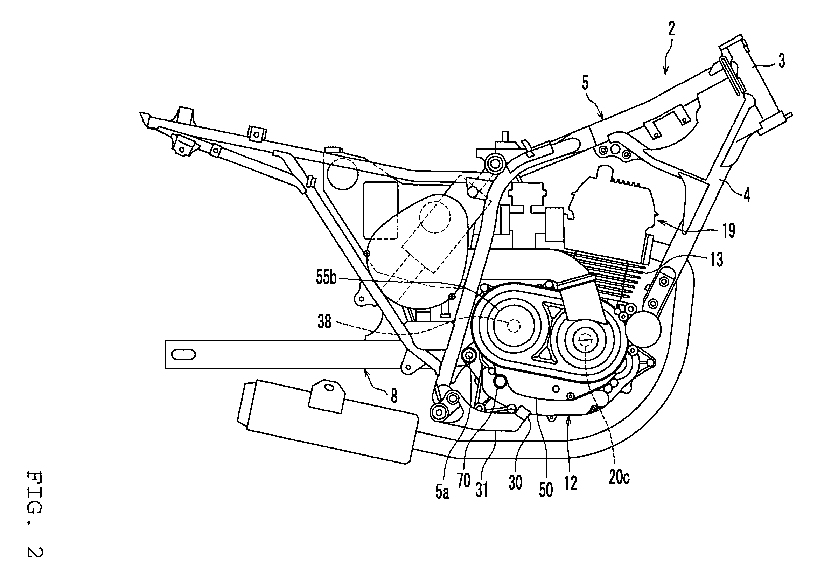

Fig. 1 is a side view of an example embodiment of a motorcycle 1. Fig. 2 is a sectional view of a part of a center portion of the motorcycle 1 in right side view. Firstly, a schematic structure of the motorcycle 1 will be described with reference to Figs. 1 and 2. In the following description, a back-and-forth direction and a lateral direction mean directions in the view from a rider (driver) sitting on a seat 11.

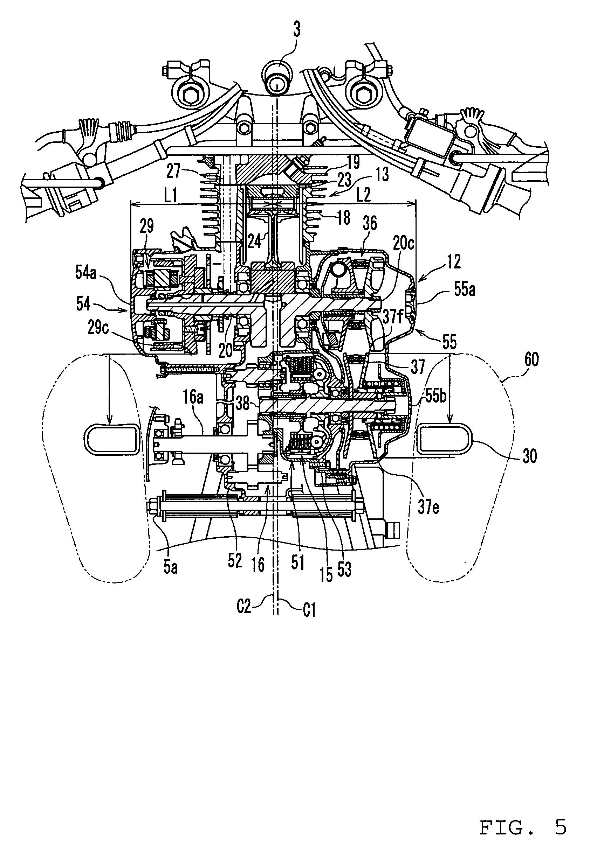

The motorcycle 1 has a body frame 2. The body frame 2 comprises a steering head pipe 3, down tube 4 and a seat pillar 5. The down tube 4 extends downward from the steering head pipe 3. The seat pillar 5 extends to the rear side from the steering head pipe 3 above the down tube 4. A supporting member 31 is mounted to a top end of the seat pillar 5. The supporting member 31 extends to the front side from the top end of the seat pillar 5. To a top end of the supporting member 31, mounted is a pair of right and left footsteps 30 on which feet 60 of a rider can be put (refer also to Fig. 5).

Above the footstep 30, a kick shaft 70, as is shown in Fig. 2.

A lower end of the steering head pipe 3 is connected to a front wheel 7 through a front fork 6 or the like. In the vicinity of a lower end of the seat pillar 5, a rear arm 8 is pivotably supported extending to the rear side. In detail, a base end of the rear arm 8 is pivotably supported on a pivot shaft 5a connected to the seat pillar 5. A top end (a rear end) of the rear ram 8 is connected to a rear wheel 9. Over the body frame 2, a cover 10 is provided for covering the body frame 2. A seat 11 is fitted on a somewhat rear side of the center of the cover 10.

Between the down tube 4 and the seat pillar 5, an engine unit 12 is mounted to (suspended on) the down tube 4 and the seat pillar 5. The engine unit 12 is formed from an engine 13, a CVT (a belt type continuously variable transmission) 14, a centrifugal clutch 15, a generator 29 and a reduction mechanism 16, which are integrated into one body. The driving force generated in the engine unit 12 is arranged to be transmitted to the rear wheel 9 through a power transmitting means (not shown) such as a chain belt.

A structure of the engine unit 12 will now be described, mainly with reference to Fig. 3. The engine unit 12 comprises the engine 13, the belt type CVT 14, the centrifugal clutch 15, the reduction mechanism 16 and the generator 29. For the sake of convenience, a partial structure of the reduction mechanism 16 is omitted from drawing in Fig. 3.

The engine unit 12 is housed in a unit case 50. The unit case 50 comprises a crank case 51, a generator case 54 and a transmission case 55.

A crankshaft 20 is housed in the crank case 51. The crank case 51 is formed from a first case block 52 and a second case block 53, which face each other in the vehicle width direction. The first case block 52 is located on the left side of the piston 23. The second case block 53 is located on the right side of the piston 23.

The transmission case 55 is mounted on the right side of the crank case 51 (the second case block 53). The transmission case 55 is formed from an inner case 56 and an outer case 57. The inner case 56 is mounted on the right side of the crank case 51 (the second case block 53). The outer case 57 is mounted on the right side of the inner case 56. A belt chamber 34 is formed into a section by means of the outer case 57 and the inner case 56.

The generator case 54 is detachably mounted on the left side of a front half part of the first case block 52. The generator case 54 divides a space to form a generator chamber for housing the generator 29 together with the first case block 52. The generator case 54 is provided at a position opposite to the primary sheave 36 in the vehicle width direction to form an expanded part of the unit case 50.

The length L1 in the vehicle width direction from a center line of the engine 13 extending in the back-and-forth direction (namely, a center line of the engine 13 extending in the back-and-forth direction) C2 to an outer end 54a of the generator case 54 in the vehicle width direction is longer than the length L2 from the center line C2 of the engine 13 to an outer end 55a of a part of the transmission case 55 in the vehicle width direction, the part being for housing the primary sheave 36. That is to say, the generator case 54, which forms the expanded part, largely expands in the vehicle width direction more than the part of the transmission case 55 for housing the primary sheave 36.

The engine 13 comprises a crankshaft 20 extending horizontally in the vehicle width direction, a substantially cylindrical cylinder 18 and a cylinder head 19. The crankshaft 20 is housed in the crank case 51. The crankshaft 20 is supported on the first case block 52 and the second case block 53 through bearings 21 and 22.

The cylinder 18 is connected obliquely upward in front of the crank case 51 (refer also to Fig. 1). The cylinder head 19 is connected to a top end of the cylinder 18. The piston 23 is slidably inserted into the cylinder 18. The piston 23 is connected on a crankshaft 20 side thereof to one end of a connection rod 24. The other end of the connection rod 24 is connected to a crank pin 17 provided between a left crank arm 20a and a right crank arm 20b of the crankshaft 20. Accordingly, the piston 23 reciprocates in the cylinder 18 in accordance with rotation of the crankshaft 20.

In the cylinder head 19, a concave part 19a connected to an inner space of the cylinder 18 and an intake port and an exhaust port (not shown) are formed, which communicate to the concave part 19a. An ignition plug 25 is fixedly inserted in the cylinder head 19 so that an ignition part at a top end of the ignition plug 25 would be exposed in the concave part 19a.

A cam chain chamber 26 for connecting an inner part of the crank case 51 and an inner part of the cylinder head 19 is formed in a part on the left side of the cylinder 18. The cam chain chamber 26 is provided in its inside with a cam chain 27. The cam chain 27 is wound around the crankshaft 20 and the camshaft 28. This allows the camshaft 28 to rotate in accordance with rotation of the crankshaft 20, so that an intake valve and an exhaust valve, which are not shown, are opened and closed.

On the right side of a rear half part of the second case block 53, formed is an opening. The opening is closed by means of a clutch cover 32. The clutch cover 32 is detachably fixed to the second case block 53 by means of a bolt 33.

A left end of the crankshaft 20 passes through the first case block 52 to reach the inside of the generator case 54. The generator 29 is mounted to the left end of the crankshaft 20. The generator 29 comprises a rotor 29a and a stator 29b. The rotor 29a is formed into the shape of a cylinder. The stator 29b is provided in the rotor 29a.

The stator 29b is fixed to the generator case 54 so as not to rotate and not to be displaced. On the other hand, the rotor 29a is fixed to a sleeve 35 rotating together with the crankshaft 20. This allows the rotor 29a to rotate relatively to the stator 29b in accordance with rotation of the crankshaft 20, so that the generation of electricity is carried out.

In the belt chamber 34, housed is a belt type CVT 14. The belt type CVT 14 comprises the primary sheave 36 and the secondary sheave 37. The secondary sheave 37 is provided behind the primary sheave 36.

The crankshaft 20 passes through the second case block 53 and the inner case 56 to extend to the belt chamber 34. A right side part of the crankshaft 20 having reached the belt chamber 34 (here, a part on the right side of the bearing 22) forms a primary sheave shaft 20c. The primary sheave 36 is mounted to the primary sheave shaft 20c. Accordingly, the primary sheave 36 rotates together with the crankshaft 20.

The primary sheave 36 comprises a primary fixing sheave body 36a, a primary movable sheave body 36b, a roller weight 44 and a cam plate 43. The primary fixing sheave body 36a is fixed to a right top end of the primary sheave shaft 20c. The primary movable sheave body 36b is mounted to the primary sheave shaft 20c on the left side of the primary fixing sheave body 3 6a. The primary movable sheave body 36b is movable in an axial direction with respect to the primary sheave shaft 20c. The primary fixing sheave body 36a and the primary movable sheave body 36b form a belt groove 36c capable of varying its width.

On the further left side of the primary movable sheave body 36, provided is a cam plate 43. The cam plate 43 is fixed to the primary sheave shaft 20c. A space between the primary movable sheave body 36b and the cam plate 43 is narrowed toward the outer side in the diameter direction. The roller weight 44 is provided between the primary movable sheave body 36b and the cam plate 43. The roller weight 44 is provided so that it can be displaced inward or outward in the diameter direction.

On the other hand, a rear half of the transmission case 55 is provided with a secondary sheave shaft 38. The secondary sheave shaft 38 is provided substantially parallel to the primary sheave shaft 20c. The secondary sheave shaft 38 passes through the inner case 56 and the clutch cover 32 to extend to the inside of the crank case 51. The secondary sheave shaft 38 is mounted to the clutch cover 32 through a bearing 39. The secondary sheave 37 is mounted to the secondary sheave shaft 38 in the belt chamber 34.

The secondary sheave 37 comprises a secondary fixing sheave body 37a and a secondary movable sheave body 37b. The secondary fixing sheave body 37a is fixed to the secondary sheave shaft 38 in the belt chamber 34. The secondary movable sheave body 37b is mounted to the secondary sheave shaft 38 on the right side of the secondary fixing sheave body 37a. The secondary movable sheave body 37b is movable in an axial direction with respect to the secondary sheave shaft 38. The secondary fixing sheave body 37a and the secondary movable sheave body 37b form a belt groove 37c capable of varying its width.

To a right top end of the secondary sheave shaft 38, a spring stopper 47 is fixed. A compression coil spring 45 is provided between the spring stopper 47 and the secondary movable sheave body 37b. The urging force of the compression coil spring 45 causes the secondary movable sheave body 37b to be urged leftward, that is toward the secondary fixing sheave body 37a.

A V belt (a resin block V belt, for example) 41 is wound around the belt groove 37c of the secondary sheave 37 and the belt groove 36c of the primary sheave 36. Accordingly, when the primary sheave 36 rotates together with the crankshaft 20, torque thereof is transmitted to the secondary sheave 37 through the V belt 41. This results in rotation of the secondary sheave shaft 38 together with the secondary sheave 37.

A centrifugal clutch 15 is mounted to a part of the secondary sheave shaft 38 on the left side of the clutch cover 32. The centrifugal clutch 15 is further connected to the reduction mechanism 16. The centrifugal clutch 15 connects and disconnects the secondary sheave shaft 38 and the reduction mechanism 16 in accordance with the rotation speed of the secondary sheave shaft 38.

The centrifugal clutch 15 comprises a clutch boss 15a connected to the reduction mechanism 16, a substantially cylindrical clutch housing 15b and a roller weight 15c. The roller weight 15c is provided so that it can be displaced inward and outward in the diameter direction. The clutch housing 15b is fixed to the secondary sheave shaft 38. Accordingly, the clutch housing 15b rotates together with the secondary sheave shaft 38. The clutch housing 15b comprises plural clutch plates 15d provided at substantially even intervals therebetween. An interval of the clutch plates 15d adjacent to each other is arranged to be variable.

The clutch boss 15a is provided in the clutch housing 15b. The clutch boss 15a is rotatable with respect to the secondary sheave shaft 38. The clutch boss 15a comprises plural friction plates 15e provided at substantially even intervals therebetween. An interval of the friction plates 15e adjacent to each other is arranged to be variable.

The clutch plate 15d and the friction plate 15e are separated from each other and the clutch housing 15b is not connected to the clutch boss 15a when the secondary sheave shaft 38 is slow in its rotational speed. Accordingly, torque of the secondary sheave shaft 38 is not transmitted to the reduction mechanism 16.

On the other hand, when the rotational speed of the secondary sheave shaft 38 is fast, the roller weight 15c is displaced outward in the diameter direction. This narrows a distance between the adjacent friction plates 15e. The clutch plates 15d and the friction plates 15e are then respectively contacted by pressure. As a result, the clutch housing 15b is connected to the clutch boss 15a, so that the torque of the secondary sheave shaft 38 is transmitted to the reduction mechanism 16.

The torque transmitted to the reduction mechanism 16 is outputted from an output shaft 16a (not shown in Fig. 3; refer to Fig. 5) of the reduction mechanism 16 to be transmitted to the rear wheel 9. The output shaft 16a is provided behind the expanded generator case 54, as shown in Fig. 5. The output shaft 16a is provided in the crank case 51. A left part of the output shaft 16a passes through the crank case 51 to extend to the outside of the crank case 51. A power transmission means such as a chain is wound around the left side part of the output shaft 16a.

There will now be described an arrangement of respective structural members of the motorcycle 1 with reference to Figs. 1 to 5.

In the embodiment, the engine unit 12 is provided so that the center line C2 of the piston 23 extending in the back-and-forth direction would be located on the left side of a center line C1 of the steering head pipe 3 extending in the back-and-forth direction in the vehicle width direction in flat view, as shown in Fig. 5. In other words, the engine unit 12 is provided so that the center line C2 of the engine 13 would be located on the left side of the center line C1 of the body frame 2 extending in the back-and-forth direction in the vehicle width direction in flat view. That is to say, the engine unit 12 is offset to the left side opposite to a side on which the belt type CVT 14 is provided.

On the other hand, the belt type CVT 14 is provided so as to extend upward to the rear side, as shown in Fig. 4 and such. The center axis of rotation A1 of the secondary sheave shaft 38 is located at a position higher than the center axis of rotation A2 of the crankshaft 20.

As shown in Fig. 5, the footstep 30 is provided so that at least a part thereof would be located behind a rear end 29c of the generator 29. Further, at least a part of the footstep 30 is located in front of the rear end 37e of the secondary sheave 37 and behind the front end 37f of the same. At least a part of the footstep 30 is located in a part where a left side behind the generator case 54 is concave. The output shaft 16a is similarly provided in the part where a left side behind the generator case 54 is concave.

As shown in Fig. 4, at least a part of the footstep 30 is located under a lower end 37d of the secondary sheave 37 in a perpendicular direction. The footstep 30 is provided so that an upper end 30a thereof would be located above a lower end 12a of the engine unit 12.

The pivot shaft 5a is provided above at least a part of the footstep 30 and under the center axis of rotation A1 of the secondary sheave shaft 38. The pivot shaft 5a is provided at a height substantially equal to that of the center axis of rotation A2 of the crankshaft 20.

Taking account of a fact that the engine unit 12 vibrates in running of the motorcycle 1, a comparatively large clearance should be provided between the engine unit 12 and the footstep 30 for the purpose of preventing a collision between the engine unit 12 and the footstep 30. Accordingly, the footstep 30 should be provided on to the outside in the vehicle width direction in order to separate the footstep 30 from an expanded part 55b expanding outward in the vehicle width direction (refer to Figs. 1 and 2) in the case that the expanded part 55b is overlapped with the footstep 30 in the vehicle width direction, for example.

In the embodiment, however, the center axis of rotation A1 of the secondary sheave shaft 38 is provided at a position higher than the center axis of rotation A2 of the crankshaft 20 while at least a part of the footstep 30 is arranged to be located behind the rear end 29c of the generator 29 and under the lower end 37d of the secondary sheave 37, as described above. Accordingly, overlap in the vehicle width direction between the expanded part 55b expanded outward in the vehicle width direction and the footstep 30 is prevented, as shown in Fig. 4. This allows the footstep 30 to be located on a side more inner in the vehicle width direction. As a result, the vehicle width of the motorcycle 1 can be reduced.

The footstep 30, as a whole, is preferably arranged to be provided behind the rear end 29c of the generator 29 and under the lower end 37d of the secondary sheave 37. This allows the vehicle width of the motorcycle 1 to be reduced.

The above effect is large when at least a part of the footstep 30 is located in front of the rear end 37e of the secondary sheave 37 and behind the front end 37f of the secondary sheave 37 like the embodiment. Further, the effect is particularly large when the whole footstep 30 is provided in front of the rear end 37e of the secondary sheave 37 and behind the front end 37f of the secondary sheave 37.

Moreover, as in the embodiment, it may be possible to provide the center axis of rotation A1 of the secondary sheave shaft 38 at a position higher than the center axis of rotation A2 of the crankshaft 20 to provide the engine unit 12 so that the rear side thereof would be higher than the front side thereof in order to shorten the length of the engine unit 12 in the back-and-forth direction. This allows the seat pillar 5 to be provided on the further front side. As a result, the pivot shaft 5a can be also provided on the further front side, so that the rear arm 8 can be made long. Accordingly, performance of motion of the motorcycle 1 can be improved.

Furthermore, the pivot shaft 5a is located above at least a part of the footstep 30 and under the center axis of rotation A1 of the secondary sheave shaft 38 in the embodiment. Accordingly, the footstep 30 is separated more from the center axis of rotation A1 of the secondary sheave shaft 38. This allows interference of the footstep 30 with the engine unit 12 in the vehicle width direction to be reduced more. Accordingly, the footstep 30 can be provided on a side more inner of the vehicle width direction. This results in effective reduction in vehicle width of the motorcycle 1.

The pivot shaft 5a is preferably provided above an upper end of the footstep 30 and under the center axis of rotation A1 of the secondary sheave shaft 38. This allows the vehicle width of the motorcycle 1 to be especially effectively reduced.

Further, providing the center axis of rotation A1 of the secondary sheave shaft 38 comparatively upward as described above allows interference of an ankle of a foot 60, which is comparatively projecting, with the expanded part 55b to be prevented. Accordingly, the footstep 30 can be provided in a side more inner in the vehicle width direction, so that the vehicle width of the motorcycle 1 can be further effectively reduced.

In addition, interference of the unit case 50 with the pivot shaft 5a can be prevented since the pivot shaft 5a is provided above at least a part of the footstep 30 and under the center axis of rotation A1 of the secondary sheave shaft 38 . This allows the pivot shaft 5a to be provided on the further front side. Accordingly, performance of motion of the motorcycle 1 can be more improved. Even from this point of view, the pivot shaft 5a is particularly preferable to be provided above the upper end of the footstep 30 and under the center axis of rotation A1 of the secondary sheave shaft 38.

In the embodiment, the footstep 30 is provided so that the upper end 30a thereof would be located above the lower end 12a of the engine unit 12, as shown in Fig. 4. Accordingly, the footstep 30 does not project downward largely from the lower end 12a of the engine unit 12. This allows the vehicle height of the motorcycle 1 to be comparatively low.

In the embodiment, an expanded part (the generator case 54 in the embodiment) is provided in the front half of the unit case 50 on a side (the left side) opposite to a side (the right side) on which the belt type CVT 14 is provided in the vehicle width direction (refer to Fig. 5). Furthermore, the engine unit 12 is offset toward the left. Moreover, the footstep 30 is provided behind the expanded part. Accordingly, the vehicle width of the motorcycle 1 can be further reduced.

Providing the expanded part in the front half of the unit case 50 on a side (the left side) opposite to a side on which the belt type CVT 14 is provided in the vehicle width direction causes a space to be made in a rear half of the unit case 50 on the left side. This allows the width of the rear half of the unit case 50 to be narrowed.

Both of the front and rear halves of the engine unit 12 on the right side, however, project from the center line C2 of the engine 13. Accordingly, the footstep 30 should be provided so as to be separated from the center line C1 of the vehicle body in the case that the engine unit 12 is provided so that the center line C2 of the engine 13 would be accorded with the center line C1 of the vehicle body as before. The vehicle width of the motorcycle 1 thus cannot be sufficiently narrowed.

Narrowing the width of the rear half of the unit case 50 on the left side and offsetting the engine unit 12 leftward allow the left and right parts of the engine unit 12 to be prevented from expanding. As a result, the footstep 30 provided behind the expanded part can be located more closely to the center line C1 of the vehicle body. This allows the vehicle width of the motorcycle 1 to be prevented from increasing.

In front of the footstep 30, the generator case 54 is provided projecting in the vehicle width direction. Further, in front of the footstep 30, a comparatively expanded part for housing the primary sheave 36 of the transmission case 55 is located. A rider, or driver, however, puts his foot 60 on the footstep 30 so that a toe side would widen, as shown in Fig. 5. Accordingly, it is not a major matter to have an expanded part in front of the footstep 30. Therefore, the footstep 30 may be arranged so that the inner end of the footstep 30 would be provided on the inner side of the outer end 54a of the generator case 54 in the vehicle width direction. The footstep 30 may be arranged so that the inner end of the footstep 30 would be provided on the inner side of the outer end 55a of the transmission case 55 in the vehicle width direction.

That is to say, providing a comparatively large structural member in a somewhat front side part of the unit case 50 and narrowing the width of a rear side on which the footstep 30 is provided in the front-rear direction of the unit case 50 as in the embodiment allow effectively the footstep 30 to be provided more closely to the center line C1 of the vehicle body. This results in a narrower vehicle width of the motorcycle 1. Moreover, from this point of view, the cam chain 27 is preferably wound on the left side of the crankshaft 20.

In the embodiment, an example is described where the generator 29 is provided on the left side of the crankshaft 20 in the vehicle width direction. The invention, however, is not limited to the structure. An electric motor may be provided instead of the generator 29, for example. That is to say, it may be possible to provide a rotation motor having both of a function as a generator and a function as an electric motor.

In the embodiment, an example is described in which a bar-shaped body extending in the vehicle width direction forms the footstep 30. The footstep 30, however, may be in the shape of a plate, for example. That is to say, the footstep 30 may be in the shape having a flat surface part on which the foot 60 is put.

The invention is useful for a motorcycle, particularly, an off-road type motorcycle.

### DESCRIPTION OF REFERENCE NUMERALS AND SIGNS

- 1:: MOTORCYCLE
- 2:: BODY FRAME
- 3:: STEERING HEAD PIPE
- 5a:: PIVOT SHAFT
- 8:: REAR ARM
- 12:: ENGINE UNIT
- 13:: ENGINE
- 14:: CVT (BELT TYPE CONTINUOUSLY VARIABLE TRANSMISSION)
- 15:: CENTRIFUGAL CLUTCH
- 16:: REDUCTION MECHANISM
- 16a:: OUTPUT SHAFT
- 20:: CRANKSHAFT
- 20c:: PRIMARY SHEAVE SHAFT
- 23:: PISTON
- 24:: CONNECTING ROD
- 27:: CAM CHAIN
- 29:: GENERATOR
- 30:: FOOTSTEP
- 36:: PRIMARY SHEAVE
- 37:: SECONDARY SHEAVE
- 38:: SECONDARY SHEAVE SHAFT
- 50:: UNIT CASE
- 51:: CRANK CASE
- 54:: GENERATOR CASE
- 55:: TRANSMISSION CASE
- A1:: CENTER AXIS OF ROTATION OF SECONDARY SHEAVE SHAFT
- A2:: CENTER AXIS OF ROTATION OF CRANKSHAFT

## Claims

1. A motorcycle comprising:
an engine unit; and
a pair of right and left footsteps, wherein
the engine unit comprises:
a crankshaft;
a belt type continuously variable transmission including a primary sheave provided on one side of the crankshaft in a vehicle width direction, a secondary sheave shaft provided behind the crankshaft and a secondary sheave provided on the secondary sheave shaft;
a clutch provided on another side in the vehicle width direction with respect to the secondary sheave on the secondary sheave shaft; and
a rotation motor provided on the other side of the crankshaft in the vehicle width direction,
and **characterised in that**
a center axis of rotation of the secondary sheave shaft is provided at a position higher than a center axis of rotation of the crankshaft while at least a part of the pair of right and left footsteps is located behind a rear end of the rotation motor and under a lower end of the secondary sheave.

2. The motorcycle according to Claim 1, wherein at least a part of the pair of right and left footsteps is located in front of a rear end of the secondary sheave.

3. The motorcycle according to Claim 1, wherein at least a part of the pair of right and left footsteps is located behind a front end of the secondary sheave.

4. The motorcycle according to any preceding Claim, further comprising:
a body frame provided with the engine unit;
a pivot shaft mounted to the body frame;
a rear arm swingably mounted to the pivot shaft; and
a rear wheel rotatably mounted to the rear arm, wherein
the pivot shaft is provided above at least a part of the pair of right and left footsteps and under the center axis of rotation of the secondary sheave shaft.

5. The motorcycle according to any preceding Claim, wherein an upper end of the pair of right and left footsteps is located above a lower end of the engine unit.

6. The motorcycle according to any preceding Claim, further comprising:
a body frame provided with the engine unit and including a steering head pipe, wherein
the engine unit further includes a piston between the primary sheave and the rotation motor, the piston connected to the crankshaft and extending in a back-and-forth direction in flat view, and
the engine unit is provided so that a center line of the piston extending in the back-and-forth direction would be located on one side of a center line of the steering head pipe extending in the back-and-forth direction in the vehicle width direction, in flat view.

7. The motorcycle according to Claim 6, further comprising a cam chain wound around a part located on one side of a part of the crankshaft, the latter part being connected to the piston, in the vehicle width direction.

## Patentansprüche

1. Motorrad, das umfasst:
eine Motoreinheit; und
ein Paar aus einer rechten und einer linken Fußraste, wobei
die Motoreinheit umfasst;
eine Kurbelwelle;
ein stufenloses Umschlingungsgetriebe, das eine Primär-Riemenscheibe, die sich in einer Fahrzeug-Breitenrichtung an einer Seite der Kurbelwelle befindet, eine Sekundär-Riemenscheibenwelle, die sich hinter der Kurbelwelle befindet, sowie eine Sekundär-Riemenscheibe enthält, die sich an der Sekundär-Riemenscheibenwelle befindet;
eine Kupplung, die sich in der Fahrzeug-Breitenrichtung in Bezug auf die Sekundär-Riemenscheibe an der Sekundär-Riemenscheibenwelle an einer anderen Seite befindet; und
einen Drehmotor, der sich in der Fahrzeug-Breitenrichtung an der anderen Seite der Kurbelwelle befindet,
und **dadurch gekennzeichnet, dass**
eine Mittel-Drehachse der Sekundär-Riemenscheibenwelle sich an einer höheren Position befindet als eine Mittel-Drehachse der Kurbelwelle, wobei wenigstens ein Teil des Paars aus rechter und linker Fußraste hinter einem hinteren Ende des Drehmotors und unter einem unteren Ende der Sekundär-Riemenscheibe angeordnet ist.

2. Motorrad nach Anspruch 1, wobei wenigstens ein Teil des Paars aus rechter und linker Fußraste vor einem hinteren Ende der Sekundär-Riemenscheibe angeordnet ist.

3. Motorrad nach Anspruch 1, wobei wenigstens ein Teil des Paars aus rechter und linker Fußraste hinter einem vorderen Ende der Sekundär-Riemenscheibe angeordnet ist.

4. Motorrad nach einem der vorangehenden Ansprüche, das des Weiteren umfasst:
einen Karosserierahmen, der mit der Motoreinheit versehen ist;
eine Schwenkwelle, die an dem Karosserierahmen angebracht ist;
einen hinteren Arm, der schwenkbar an der Schwenkwelle angebracht ist; und
ein Hinterrad, das drehbar an dem hinteren Arm angebracht ist, wobei
sich die Schwenkwelle über wenigstens einem Teil des Paars aus rechter und linker Fußraste und unter der Mittel-Drehachse der Sekundär-Riemenscheibenwelle befindet.

5. Motorrad nach einem der vorangehenden Ansprüche, wobei ein oberes Ende des Paars aus rechter und linker Fußraste über einem unteren Ende der Motoreinheit angeordnet ist.

6. Motorrad nach einem der vorangehenden Ansprüche, das des Weiteren umfasst:
einen Karosserierahmen, der mit der Motoreinheit versehen ist und einen Steuerkopf enthält, wobei
die Motoreinheit des Weiteren einen Kolben zwischen der Primär-Riemenscheibe und dem Drehmotor enthält, der Kolben mit der Kurbelwelle verbunden ist und sich in Draufsicht in einer Längsrichtung erstreckt, und
die Motoreinheit so eingerichtet ist, dass eine Mittellinie des Kolbens, der sich in der Längsrichtung erstreckt, in Draufsicht in der Fahrzeug-Breitenrichtung an einer Seite einer Mittellinie des Steuerkopfes angeordnet wäre, die sich in der Längsrichtung erstreckt.

7. Motorrad nach Anspruch 6, das des Weiteren eine Steuerkette umfasst, die um einen mit dem Kolben verbundenen Teil herumläuft, der in der Fahrzeug-Breitenrichtung an einer Seite eines Teils der Kurbelwelle angeordnet ist.

## Revendications

1. Motocyclette comprenant :
- une unité de moteur ; et
- une paire de cale-pieds droit et gauche, pour laquelle :
- l'unité de moteur comprend :
- un vilebrequin ;
- un transmission continuellement variable de type à courroie incluant une poulie primaire disposée sur un côté du vilebrequin dans une direction de la largeur du véhicule, un arbre de poulie secondaire disposé derrière le vilebrequin et une poulie secondaire disposée sur l'arbre de poulie secondaire ;
- un embrayage disposé sur un autre côté dans la direction de la largeur du véhicule par rapport à la poulie secondaire sur l'arbre de poulie secondaire ; et
- un moteur de rotation disposé sur l'autre côté du vilebrequin dans la direction de la largeur du véhicule, **caractérisée en ce que** :
- un axe central de rotation de l'arbre de poulie secondaire est disposé en une position plus élevée qu'un axe central de rotation du vilebrequin, tandis qu'au moins une partie de la paire de cale-pieds droit et gauche est située derrière une extrémité arrière du moteur de rotation et sous une extrémité inférieure de la poulie secondaire.

2. Motocyclette selon la revendication 1, pour laquelle au moins une partie de la paire de cale-pieds droit et gauche est située devant une extrémité arrière de la poulie secondaire.

3. Motocyclette selon la revendication 1, pour laquelle au moins une partie de la paire de cale-pieds droit et gauche est située derrière une extrémité avant de la poulie secondaire.

4. Motocyclette selon l'une quelconque des revendications précédentes, comprenant en outre :
- un cadre pourvu de l'unité de moteur ;
- un arbre de pivotement monté sur le cadre ;
- un bras arrière monté de façon oscillante sur l'arbre de pivotement ; et
- une roue arrière montée de façon rotative sur l'arbre arrière, pour laquelle :
- l'arbre de pivotement est disposé au-dessus d'au moins une partie de la paire de cale-pieds droit et gauche et au-dessous de l'axe central de rotation de l'arbre de poulie secondaire.

5. Motocyclette selon l'une quelconque des revendications précédentes, pour laquelle une extrémité supérieure de la paire de cale-pieds droit et gauche est située au-dessus d'une extrémité inférieure de l'unité de moteur.

6. Motocyclette selon l'une quelconque des revendications précédentes, comprenant en outre :
- un cadre pourvu de l'unité de moteur et incluant un tube de tête de direction, pour laquelle :
- l'unité de moteur inclut en outre un piston entre la poulie primaire et le moteur de rotation, le piston étant connecté au vilebrequin et s'étendant dans une direction d'avant en arrière en vue plane ; et
- l'unité de moteur est disposée de sorte qu'une ligne centrale du piston s'étendant dans la direction d'avant en arrière serait située sur un côté d'une ligne centrale du tube de tête de direction s'étendant dans la direction d'avant en arrière dans la direction de la largeur du véhicule, en vue plane.

7. Motocyclette selon la revendication 6, comprenant en outre :
- une chaine d'arbre à cames enroulée autour d'une pièce située sur un côté d'une partie du vilebrequin, cette dernière pièce étant connectée au piston, dans la direction de la largeur du véhicule.
